# EUROPEAN PATENT APPLICATION

(11) **EP 4 174 135 A1**
(43) Date of publication of application: **03.05.2023**
(21) Application number: 21205109.8
(22) Date of filing: 27.10.2021
(51) Int. Cl.: C08L 77/00

(54) **FIBER-REINFORCED POLYAMIDE HAVING IMPROVED TOUGHNESS FOR LOW TEMPERATURE APPLICATIONS**

(71) Applicant: SHPP Global Technologies B.V., 4612 PX Bergen op Zoom (NL)
(72) Inventor: GENG, Eddie Kebin, Selkirk (US); NARANG, Kristie Jean, Selkirk (US); ZHOU, Hao, Mt Vernon (US)
(74) Representative: Dehns

(57) **Abstract**

Thermoplastic compositions include: at least one polyamide resin; at least about 30 wt% of a reinforcing fiber; and an impact modifier component including at least one impact modifier having a glass transition temperature (Tg) of about -30 degrees Celsius (°C) or lower. The reinforcing fiber has a fiber length of at least about 10 millimeters (mm). The thermoplastic composition has a notched Izod impact strength of at least 300 Joules per meter (J/m) at -40 °C and a multi-axial impact energy of at least 15 J at -40 °C. Methods of forming a pelletized thermoplastic composition, a plurality of thermoplastic pellets, and a composition including the plurality of thermoplastic pellets are also described.

## Description

### FIELD OF THE DISCLOSURE

The present disclosure relates to thermoplastic compositions including polyamide resin, a reinforcing fiber and an impact modifier; the compositions have improved low temperature impact properties.

### BACKGROUND OF THE DISCLOSURE

High impact polyamide (for example, super touch nylon DuPont/Dow Zytel^{®}) is typically a neat PA resin with an impact modifier. When reinforced with glass fiber or carbon fiber, the material becomes more brittle, especially at low temperatures. Impact modifier manufacturers can provide impact data for the impact modifier in neat polyamide resin, but not in compositions having fibers. Impact data is typically provided at room temperature (e.g., 23 degrees Celsius (°C)) and occasionally at -20 °C.

In addition, parts molded from a fiber-reinforced polyamide often have a poor surface quality due to fiber dispersion in the polyamide resin and/or poor compatibility of the impact modifier in the polyamide resin. Surface finish and low temperature impact performance are both desirable in certain applications.

A variety of impact modifiers could be used to improve the impact properties for polyamide (polyamide 6 (PA6), polyamide 6,6 (PA66), polyphthalamide (PPA), etc.). Conventional impact modifiers include functionalized ethylene propylene diene monomer (EPDM) and silicone rubber, styrenic copolymers such as styrene-ethylene-butylene-styrene (SEBS), ethylene acrylic acid copolymers (EAA), polyolefins such as functionalized polyethylene and ethylene-propylene copolymers, and ionomers such as DuPont Surlyn^{®}. Most of these impact modifiers are suitable for boosting impact properties of compositions at a temperature of from room temperature to -20 °C. These impact modifiers are not known to provide good impact properties to polyamide compositions at very low temperatures (less than -20 °C such as -30 °C or even -40 °C); and particularly not for fiber-reinforced polyamide compositions.

ROYALTUF^{™} 485 (SI Group) has been used in 40% long glass fiber reinforced PA66 compositions to improve the impact properties of the polyamide. ROYALTUF^{™} 485 is a maleic anhydride-based EPDM. Polyamide compositions including this impact modifier have good impact properties at room temperature, good processability and a good molded part surface. But the impact modifier does not provide sufficient impact properties for challenging applications at very low temperatures; in some cases such compositions even fail drop impact (high strain rate) tests at the room temperature.

These and other shortcomings are addressed by aspects of the present disclosure.

### SUMMARY

Aspects of the disclosure relate to thermoplastic compositions including: at least one polyamide resin; at least about 30 wt% of a reinforcing fiber, wherein the reinforcing fiber has a fiber length of at least about 10 millimeters (mm); and an impact modifier component including at least one impact modifier having a glass transition temperature (Tg) of about -30 degrees Celsius (°C) or lower as determined in accordance with a differential scanning calorimetry (DSC) test method at a scan rate of 20 °C per minute in nitrogen. The thermoplastic composition has a notched Izod impact strength of at least 300 Joules per meter (J/m) at -40 °C as determined in accordance with ASTM D256 and ASTM D4812, and a multi-axial impact energy of at least 15 J at -40 °C as determined in accordance with ASTM D3763. The combined weight percent value of all components does not exceed 100 wt%, and all weight percent values are based on the total weight of the composition.

Further aspects of the disclosure relate to methods for forming a pelletized thermoplastic composition including: combining, to form a mixture, (a) at least one polyamide resin, and (b) an impact modifier component including at least one impact modifier having a glass transition temperature (Tg) of about -30 degrees Celsius (°C) or lower as tested in accordance with a differential scanning calorimetry (DSC) test method at a scan rate of 20 °C per minute in nitrogen; extruding the mixture in a pultrusion process to combine the mixture with a continuous reinforcing fiber and form an extruded composition; and pelletizing the extruded composition to form the pelletized thermoplastic composition. The pelletized thermoplastic composition includes reinforcing fiber having a fiber length of at least about 10 mm. The pelletized thermoplastic composition has a notched Izod impact strength of at least 300 Joules per meter (J/m) at -40 °C as determined in accordance with ASTM D256 and ASTM D4812, and a multi-axial impact energy of at least 15 J at -40 °C as determined in accordance with ASTM D3763.

Yet further aspects of the disclosure relate to methods for forming a plurality of thermoplastic pellets including: (a) forming polyamide-fiber pellets from a process including (1) forming a first mixture including at least one polyamide resin, (2) extruding the first mixture in a pultrusion process to combine the first mixture with a continuous reinforcing fiber and form a first extruded composition, and (3) pelletizing the first extruded composition to form the polyamide-fiber pellets; and (b) forming impact modifier pellets from a process including (1) forming a second mixture including at least one polyamide resin and an impact modifier component including at least one impact modifier having a glass transition temperature (Tg) of about -30 degrees Celsius (°C) or lower as tested in accordance with a differential scanning calorimetry (DSC) test method at a scan rate of 20 °C per minute in nitrogen, (2) extruding the second mixture to form a second extruded composition, and (3) pelletizing the second extruded composition to form the impact modifier pellets. The polyamide-fiber pellets include reinforcing fiber having a fiber length of at least about 10 mm.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIGS. 1A and 1B are graphs showing total energy of puncture impact and notched Izod impact properties at -40 °C for comparative and example compositions according to aspects of the disclosure.
FIGS. 2A and 2B are graphs showing total energy of puncture impact and notched Izod impact properties at 23 °C for comparative and example compositions according to aspects of the disclosure.
FIG. 3 is a graph showing gloss properties of comparative and example compositions according to aspects of the disclosure.

### DETAILED DESCRIPTION

The present disclosure relates to long and continuous fiber reinforced injection moldable polyamide compositions having superior impact performance at very low temperatures (e.g., -40 °C). The compositions are suitable for articles such as firearm components/accessories (e.g., military weapon accessories), equipment and sporting goods used in extremely cold weather conditions. The present disclosure can be understood more readily by reference to the following detailed description of the disclosure and the Examples included therein. In various aspects, the present disclosure pertains to thermoplastic compositions including: at least one polyamide resin; at least about 30 wt% of a reinforcing fiber; and an impact modifier component including at least one impact modifier having a glass transition temperature (Tg) of about -30 degrees Celsius (°C) or lower as determined in accordance with a differential scanning calorimetry (DSC) test method at a scan rate of 20 °C per minute in nitrogen. The reinforcing fiber has a fiber length of at least about 10 millimeters (mm). The thermoplastic composition has a notched Izod impact strength of at least 300 Joules per meter (J/m) at -40 °C as determined in accordance with ASTM D256 and ASTM D4812, and a multi-axial impact energy of at least 15 J at -40 °C as determined in accordance with ASTM D3763.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyamide resin" includes mixtures of two or more polyamide resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: at least one polyamide resin; at least about 30 wt% of a reinforcing fiber, wherein the reinforcing fiber has a fiber length of at least about 10 millimeters (mm); and an impact modifier component including at least one impact modifier having a glass transition temperature (Tg) of about -30 degrees Celsius (°C) or lower as determined in accordance with a differential scanning calorimetry (DSC) test method at a scan rate of 20 °C per minute in nitrogen. The thermoplastic composition has a notched Izod impact strength of at least 300 Joules per meter (J/m) at -40 °C as determined in accordance with ASTM D256 and ASTM D4812, and a multi-axial impact energy of at least 15 J at -40 °C as determined in accordance with ASTM D3763. The combined weight percent value of all components does not exceed 100 wt%, and all weight percent values are based on the total weight of the composition.

In some aspects the polyamide resin includes polyamide 6,6 (PA66), polyamide 6 (PA6), polyamide 6,12, polyamide 6,10, polyamide 10,10, polyamide 4,10, polyamide 4,6, aromatic polyamide, semi-aromatic polyamide, or a combination thereof. Examples of semi-aromatic amides include, but are not limited to, poly(hexamethylene terephthalamide) (PA 6T) and poly(hexamethylene isophthalamide) (61). In certain aspects the polyamide resin does not include a long-chain aliphatic polyamide such as, but not limited to, nylons such as polyamide 11, polyamide 12, polyamide 12,12, and polyether block amide (PEBA).

In specific aspects the composition includes at least two polyamide resins. In particular aspects the composition includes PA6 and PA66. In yet further aspects the at least two polyamide resins include: a first polyamide having a relative solution viscosity (RSV) of at least 2.5 and/or a melt volume rate (MVR) at 275 °C and 5 kilogram (kg) of less than or equal to 140 cubic centimeters per 10 min (cm³/10 min); and a second polyamide having an RSV of 2.8 or less. RSV may be determined according to conventional methods, such as in accordance with ISO 307 using 1 wt% polyamide resin in 96% sulfuric acid at 25 °C. The first polyamide resin contributes a higher molecular weight to provide improved impact properties; the second polyamide resin has a low-to-mid range viscosity so that it can penetrate the fibers of the reinforcing fiber and wet the fiber surface.

In some aspects the reinforcing fiber has a fiber length of from about 10 mm to about 20 mm, or from about 10 mm to about 18 mm, or from about 12 mm to about 20 mm, or from about 12 mm to about 18 mm, or at least 12 mm. The reinforcing fiber may include, but is not limited to, glass fiber, carbon fiber, or a combination thereof.

The thermoplastic composition in some aspects includes from about 30 wt% to about 70 wt% of the reinforcing fiber. In further aspects the composition includes from about 40 wt% to about 70 wt%, or from about 30 wt% to about 60 wt%, or from about 40 wt% to about 60 wt%, or from about 30 wt% to about 50 wt%, or from about 40 wt% to about 50 wt%, of the reinforcing fiber.

In certain aspects the at least one impact modifier includes maleic anhydride (MAH), carboxylic acid, epoxy-modified ethylene-octene, epoxy-modified ethylene-hexene, epoxy-modified ethylene-butene, or a combination thereof. In specific aspects the at least one impact modifier does not include rubber, styrenic copolymers, acrylic impact modifiers, ionomers (such as those available from DuPont), TPU (thermoplastic polyurethane), or silicon rubber.

In particular it was found that maleic anhydride long chain ethylene-octene, ethylene-hexene, and/or ethylene-butene, provide superior impact performance at very low temperatures. These impact modifiers can have a glass transition temperature (Tg) as low as - 40° and even -60 °C, in contrast to conventional impact modifiers which have a Tg of from about -20 °C to about -40 °C. In general, impact modifiers have high molecular weight for toughness. It was unexpected that superior low temperature impact performance could be achieved with low Tg and high molecular weight polyolefin copolymers alone; superior low temperature performance was achieved when combined with impact modifiers according to aspects of the disclosure.

In further aspects the impact modifier component includes at least two impact modifiers having a Tg of about -30 °C or lower. The thermoplastic compositions may include from about 3 wt% to about 15 wt%, or from about 3 wt% to about 12 wt%, or from about 6 wt% to about 15 wt%, or from about 6 wt% to about 12 wt%, or from about 9 wt% to about 15 wt%, or from about 9 wt% to about 12 wt% of the impact modifier component.

The thermoplastic composition in some aspects includes at least one additional additive. The at least one additional additive includes, but is not limited to, an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an additional impact modifier, a blowing agent, a reinforcing agent, or a combination thereof.

Thermoplastic compositions according to aspects of the disclosure may have a heat deflection temperature of at least 200 °C, or at least 230 °C at 1.82 Megapascals (MPa) as tested in accordance with ASTM D648, or a tensile modulus of at least 10,000 MPa, or at least 12,000 MPa as tested in accordance with ASTM D638.

In some aspects the composition has an improved surface appearance as compared to a conventional thermoplastic composition that includes an ethylene copolymer-based impact modifier. Surface appearance may be evaluated by gloss property, as described herein.

The thermoplastic compositions may be injection molded or injection moldable. In particular aspects the composition is a dispersed pultruded composition. An example pultrusion process is SABIC's LNP^{™} Verton^{™} process. A pultrusion process produces continuous lengths of fiber reinforced polymers having a constant cross-section. In the process reinforced fibers, the thermoplastic resin, and other additives (e.g., impact modifiers) are pulled through a heated die, converting them into fiber-reinforced polymer (FRP) composite products. The FRP product may then be pelletized. As discussed below, the present disclosure relates to methods of forming pellets that include all of the components of the thermoplastic composition (one-pellet method) and pellets that include one type of pellet that includes the reinforcing fiber and polyamide and another type of pellet that includes the impact modifier (two-pellet method).

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

In some aspects methods for forming a pelletized thermoplastic composition include: combining, to form a mixture, (a) at least one polyamide resin, and (b) an impact modifier component including at least one impact modifier having a glass transition temperature (Tg) of about -30 degrees Celsius (°C) or lower as tested in accordance with a differential scanning calorimetry (DSC) test method at a scan rate of 20 °C per minute in nitrogen; extruding the mixture in a pultrusion process to combine the mixture with a continuous reinforcing fiber and form an extruded composition; and pelletizing the extruded composition to form the pelletized thermoplastic composition. The pelletized thermoplastic composition includes reinforcing fiber having a fiber length of at least about 10 mm. The pelletized thermoplastic composition has a notched Izod impact strength of at least 300 Joules per meter (J/m) at -40 °C as determined in accordance with ASTM D256 and ASTM D4812, and a multi-axial impact energy of at least 15 J at -40 °C as determined in accordance with ASTM D3763. The combined weight percent value of all components does not exceed 100 wt%, and all weight percent values are based on the total weight of the composition.

This described method may be consider a one-pellet process for forming the pelletized thermoplastic composition (and articles including the pelletized thermoplastic composition). The one-pellet process is simple in that the pellet includes all of the components of the thermoplastic composition; customers (e.g., molders) can directly use the pellets. One drawback to this method is that impact modifiers and other additives may be less thermally stable and can degrade due to high processing temperature.

In other aspects methods for forming a plurality of thermoplastic pellets includes:
(a) forming polyamide-fiber pellets from a process including
   (1) forming a first mixture including at least one polyamide resin,
   (2) extruding the first mixture in a pultrusion process to combine the first mixture with a continuous reinforcing fiber and form a first extruded composition, and
   (3) pelletizing the first extruded composition to form the polyamide-fiber pellets; and
(b) forming impact modifier pellets from a process including
   (1) forming a second mixture including at least one polyamide resin and an impact modifier component including at least one impact modifier having a glass transition temperature (Tg) of about -30 degrees Celsius (°C) or lower as tested in accordance with a differential scanning calorimetry (DSC) test method at a scan rate of 20 °C per minute in nitrogen,
   (2) extruding the second mixture to form a second extruded composition, and
   (3) pelletizing the second extruded composition to form the impact modifier pellets,
wherein the polyamide-fiber pellets include reinforcing fiber having a fiber length of at least about 10 mm.

This method may further include: (a) combining the polyamide-fiber pellets and the impact modifier pellets to form a pellet mixture; and (b) melting the pellet mixture to form the thermoplastic composition. The thermoplastic composition has a notched Izod impact strength of at least 300 Joules per meter (J/m) at -40 °C as determined in accordance with ASTM D256 and ASTM D4812, and a multi-axial impact energy of at least 15 J at -40 °C as determined in accordance with ASTM D3763. The step (b) of melting the pellet mixture may include injection molding, extruding, compression molding, rotational molding, blow molding, or thermoforming the pellet mixture to form the thermoplastic composition.

The previously described method may be considered a two-pellet process in which polyamide-fiber pellets including the reinforcing fiber are formed in step (a) and pellets including an impact modifier concentrate (e.g., a master batch) are formed in step (b). The two-pellet method preserves the properties of the impact modifier(s) and other additives, but the customer (e.g., molder) will need to dry blend the two different pellets together before molding.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, compression molding, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In further aspects the articles may be suitable for use in extremely cold weather conditions, such as but not limited to gun megaclips, equipment and sporting goods.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic composition comprising:
   at least one polyamide resin;
   at least about 30 wt% of a reinforcing fiber, wherein the reinforcing fiber has a fiber length of at least about 10 millimeters (mm); and
   an impact modifier component comprising at least one impact modifier having a glass transition temperature (Tg) of about -30 degrees Celsius (°C) or lower as determined in accordance with a differential scanning calorimetry (DSC) test method at a scan rate of 20 °C per minute in nitrogen,
   wherein
   the thermoplastic composition has a notched Izod impact strength of at least 300 Joules per meter (J/m) at -40 °C as determined in accordance with ASTM D256 and ASTM D4812,
   the thermoplastic composition has a multi-axial impact energy of at least 15 J at -40 °C as determined in accordance with ASTM D3763, and
   the combined weight percent value of all components does not exceed 100 wt%, and all weight percent values are based on the total weight of the composition.
Aspect 2. The thermoplastic composition according to Aspect 1, wherein the polyamide resin comprises polyamide 6,6, polyamide 6, polyamide 6,12, polyamide 6,10, aromatic polyamide, semi-aromatic polyamide, or a combination thereof.
Aspect 3. The thermoplastic composition according to Aspect 1 or 2, wherein the composition comprises at least two polyamide resins.
Aspect 4. The thermoplastic composition according to any of Aspects 1 to 3, wherein a molded article comprising the composition has improved gloss properties when injection molded at a speed of at least 3 inches per minute as compared to a molded article comprising a comparative composition that does not include the impact modifier component, wherein gloss is determined at 20 degrees and 60 degrees in accordance with ISO 2813, ASTM D 523, and DIN 67530.
Aspect 5. The thermoplastic composition according to any of Aspects 1 to 4, wherein the reinforcing fiber comprises glass fiber, carbon fiber, or a combination thereof.
Aspect 6. The thermoplastic composition according to any of Aspects 1 to 5, wherein the composition comprises from about 30 wt% to about 60 wt% of the reinforcing fiber.
Aspect 7. The thermoplastic composition according to any of Aspects 1 to 6, wherein the at least one impact modifier comprises maleic anhydride, carboxylic acid, epoxy-modified ethylene-octene, epoxy-modified ethylene-hexene, epoxy-modified ethylene-butene, or a combination thereof.
Aspect 8. The thermoplastic composition according to Aspect 7, wherein the impact modifier component comprises at least two impact modifiers having a Tg of about -30 °C or lower.
Aspect 9. The thermoplastic composition according to any of Aspects 1 to 8, wherein the composition comprises from about 3 wt% to about 15 wt% of the impact modifier component.
Aspect 10. The thermoplastic composition according to any of Aspects 1 to 9, wherein the composition comprises at least one additional additive.
Aspect 11. The thermoplastic composition according to Aspect 10, wherein the at least one additional additive comprises an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an additional impact modifier, a blowing agent, a reinforcing agent, or a combination thereof.
Aspect 12. The thermoplastic composition according to any of Aspects 1 to 11, wherein:
   the composition has a heat deflection temperature of at least 200 °C at 1.82 Megapascals (MPa) as tested in accordance with ASTM D648, or
   the composition has a tensile modulus of at least 10,000 MPa as tested in accordance with ASTM D638.
Aspect 13. The thermoplastic composition according to any of Aspects 1 to 12, wherein the composition is injection moldable.
Aspect 14. The thermoplastic composition according to any of Aspects 1 to 13, wherein the composition is a dispersed pultruded composition.
Aspect 15. The thermoplastic composition according to any of Aspects 1 to 14, wherein the composition has an improved surface appearance as compared to a conventional thermoplastic composition that includes an ethylene copolymer-based impact modifier.
Aspect 16. A method for forming a pelletized thermoplastic composition comprising:
   combining, to form a mixture, (a) at least one polyamide resin, and (b) an impact modifier component comprising at least one impact modifier having a glass transition temperature (Tg) of about -30 degrees Celsius (°C) or lower as tested in accordance with a differential scanning calorimetry (DSC) test method at a scan rate of 20 °C per minute in nitrogen;
   extruding the mixture in a pultrusion process to combine the mixture with a continuous reinforcing fiber and form an extruded composition; and
   pelletizing the extruded composition to form the pelletized thermoplastic composition, wherein
   the pelletized thermoplastic composition comprises reinforcing fiber having a fiber length of at least about 10 mm,
   the pelletized thermoplastic composition has a notched Izod impact strength of at least 300 Joules per meter (J/m) at -40 °C as determined in accordance with ASTM D256 and ASTM D4812,
   the pelletized thermoplastic composition has a multi-axial impact energy of at least 15 J at -40 °C as determined in accordance with ASTM D3763, and
   the combined weight percent value of all components does not exceed 100 wt%, and all weight percent values are based on the total weight of the composition.
Aspect 17. A method for forming a plurality of thermoplastic pellets comprising:
   (a) forming polyamide-fiber pellets from a process comprising
      (1) forming a first mixture comprising at least one polyamide resin,
      (2) extruding the first mixture in a pultrusion process to combine the first mixture with a continuous reinforcing fiber and form a first extruded composition, and
      (3) pelletizing the first extruded composition to form the polyamide-fiber pellets; and
   (b) forming impact modifier pellets from a process comprising
      (1) forming a second mixture comprising at least one polyamide resin and an impact modifier component comprising at least one impact modifier having a glass transition temperature (Tg) of about -30 degrees Celsius (°C) or lower as tested in accordance with a differential scanning calorimetry (DSC) test method at a scan rate of 20 °C per minute in nitrogen,
      (2) extruding the second mixture to form a second extruded composition, and
      (3) pelletizing the second extruded composition to form the impact modifier pellets,
   wherein the polyamide-fiber pellets comprise reinforcing fiber having a fiber length of at least about 10 mm.
Aspect 18. A method for forming a thermoplastic composition according to Aspect 17, comprising:
   (a) combining the polyamide-fiber pellets and the impact modifier pellets to form a pellet mixture; and
   (b) melting the pellet mixture to form the thermoplastic composition,
   wherein
   the thermoplastic composition has a notched Izod impact strength of at least 300 Joules per meter (J/m) at -40 °C as determined in accordance with ASTM D256 and ASTM D4812,
   the thermoplastic composition has a multi-axial impact energy of at least 15 J at -40 °C as determined in accordance with ASTM D3763, and
   the combined weight percent value of all components does not exceed 100 wt%, and all weight percent values are based on the total weight of the composition.
Aspect 19. The method according to Aspect 18, wherein the step (b) of melting the pellet mixture comprises injection molding, extruding, compression molding, rotational molding, blow molding, or thermoforming the pellet mixture to form the thermoplastic composition.
Aspect 20. The method according to any of Aspects 16, 18 or19, wherein the pelletized thermoplastic composition according to Aspect 16 or the thermoplastic composition according to Aspect 18 or 19 comprises at least about 30 wt% of the reinforcing fiber.
Aspect 21. The method according to any of Aspects 16 to 20, wherein the mixture according to Aspect 16 or the polyamide-fiber pellets according to any of Aspects 17 to 20 comprises at least two polyamide resins.
Aspect 22. The method according to any of Aspects 16 to 21, wherein the polyamide resin comprises polyamide 6,6, polyamide 6, polyamide 6,12, polyamide 6,10, polyamide 10,10, polyamide 4,10, polyamide 4,6, aromatic polyamide, semi-aromatic polyamide, or a combination thereof.
Aspect 23. The method according to any of Aspects 17 to 22, wherein a molded article comprising the thermoplastic composition has improved gloss properties when injection molded at a speed of at least 3 inches per minute as compared to a molded article comprising a comparative composition that does not include the impact modifier component, wherein gloss is determined at 20 degrees and 60 degrees in accordance with ISO 2813, ASTM D 523, and DIN 67530.
Aspect 24. The method according to any of Aspects 16 to 23, wherein the reinforcing fiber comprises glass fiber, carbon fiber, or a combination thereof.
Aspect 25. The method according to any of Aspects 16 to 24, wherein the thermoplastic composition comprises from about 30 wt% to about 60 wt% of the reinforcing fiber.
Aspect 26. The method according to any of Aspects 16 to 25, wherein the at least one impact modifier comprises maleic anhydride, carboxylic acid, epoxy-modified ethylene-octene, epoxy-modified ethylene-hexene, epoxy-modified ethylene-butene, or a combination thereof.
Aspect 27. The method according to any of Aspects 16 to 26, wherein the impact modifier component comprises at least two impact modifiers having a Tg of about -30 °C or lower.
Aspect 28. The method according to any of Aspects 16 to 27, wherein the composition comprises from about 3 wt% to about 15 wt% of the impact modifier component.
Aspect 29. The method according to any of Aspects 16 to 28, wherein the composition comprises at least one additional additive.
Aspect 30. The method according to Aspect 29, wherein the at least one additional additive comprises an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an additional impact modifier, a blowing agent, a reinforcing agent, or a combination thereof.
Aspect 31. The method according to any of Aspects 16 to 30, wherein:
   the composition has a heat deflection temperature of at least 200 °C at 1.82 Megapascals (MPa) as tested in accordance with ASTM D648, or
   the composition has a tensile modulus of at least 10,000 MPa as tested in accordance with ASTM D638.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Components used in the comparative and example compositions described herein are listed in Table 1:

**Table 1 - Components Used in Compositions**

| Component | Description |
|---|---|
| PA66 | Polyamide 6,6, Invista U4803 |
| PA6 | Polyamide 6, Aegis^{®} H8202 |
| GF | Glass fiber, PPG 4588 TEX 2400 |
| STAB | Stabilizer, potassium bromide |
| Lub(1) | Lubricant/processing aid, Acrawax C |
| Lub(2) | Lubricant/processing aid, aluminum distearate |
| MAH-EP(1) | Semi-crystalline MAH modified ethylene copolymer (ethylene-propylene), ROYALTUF^{™} 485 |
| MAH-EB | Amorphous MAH modified ethylene copolymer (ethylene-butene), Tg -59 °C, Exxelor^{™} VA-1803 |
| MAH-HF(1) | Semi-crystalline MAH modified ethylene copolymer; high flow, Exxelor^{™} VA-1840 |
| MAH-HF(2) | MAH modified ethylene copolymer, high flow, ARMIDAN^{®} NT-7410 |
| MAH-EP(2) | MAH modified ethylene copolymer, ARMIDAN^{®} NT-7510 |
| EA | Ethylene acrylate copolymer, FUSABOND^{™} A560 |
| Ion | Ionomer of ethylene acid acrylate terpolymer, DuPont^{™} Surlyn^{®} 9320 |
| TPU | Aromatic polyester-based TPU, Texin^{®} 285A |

Properties listed in Table 2 were evaluated for the compositions:

**Table 2 - Description of Properties**

| Property | Description |
|---|---|
| SG | Specific gravity, ASTM D792 |
| TM | Tensile modulus of elasticity (Megapascals (MPa)), ASTM D638 |
| TS | Tensile stress at break (MPa), ASTM D638 |
| TE | Tensile elongation at break (%), ASTM D638 |
| FM | Flexural modulus (MPa), ASTM D790, 3-point flexural test |
| FS | Flexural stress at break (MPa), ASTM D790, 3-point flexural test |
| NII 23 | Notched Izod impact strength (Joules per meter (J/m)), 23 °C, ASTM D256, ASTM D4812 |
| UNII 23 | Unnotched Izod impact strength (J/m), 23 °C, ASTM D256, ASTM D4812 |
| NII -40 | Notched Izod impact strength (J/m), -40 °C, ASTM D256, ASTM D4812 |
| UNII -40 | Unnotched Izod impact strength (J/m), -40 °C, ASTM D256, ASTM D4812 |
| MAI 23 (max) | Multi-axial impact (puncture impact) (J), energy to max load, 23 °C, ASTM D3763 |
| MAI 23 (fail) | Multi-axial impact (puncture impact) (J), energy to failure, 23 °C, ASTM D3763 |
| MAI 23 (total) | Multi-axial impact (puncture impact) (J), total energy, 23 °C, ASTM D3763 |
| MAI -40 (max) | Multi-axial impact (puncture impact) (J), energy to max load, -40 °C, ASTM D3763 |
| MAI -40 (fail) | Multi-axial impact (puncture impact) (J), energy to failure, -40 °C, ASTM D3763 |
| MAI -40 (total) | Multi-axial impact (puncture impact) (J), total energy, -40 °C, ASTM D3763 |
| HDT 0.455 | Heat deflection temperature at 0.455 MPa (°C), ASTM D648 |
| HDT 1.82 | Heat deflection temperature at 1.82 MPa (°C), ASTM D648 |

Comparative and example compositions and their properties are listed in Tables 3A, 3B, 4A, 4B, 5A, 5B, 6A and 6B below:

**Table 3A - Comparative and Example Compositions**

| Component | C1 | Ex1 | Ex2 | Ex3 | Ex4 | Ex5 | Ex6 |
|---|---|---|---|---|---|---|---|
| PA66 | 47.05 | 24.16 | 24.16 | 24.16 | 24.16 | 24.16 | 24.16 |
| PA6 | 11.65 | 27.25 | 24.25 | 21.25 | 27.25 | 24.25 | 21.25 |
| GF | 40.7 | 42 | 42 | 42 | 42 | 42 | 42 |
| STAB | 0.25 | 0.25 | 0.25 | 0.25 | 0.25 | 0.25 | 0.25 |
| Lub(1) | 0.2 | 0.19 | 0.19 | 0.19 | 0.19 | 0.19 | 0.19 |
| Lub(2) | 0.15 | 0.15 | 0.15 | 0.15 | 0.15 | 0.15 | 0.15 |
| MAH-EP(1) | | 6 | 9 | 12 | | | |
| MAH-EB | | | | | 6 | 9 | 12 |
| MAH-HF(1) | | | | | | | |
| MAH-HF(2) | | | | | | | |
| MAH-EP(2) | | | | | | | |
| EA | | | | | | | |
| Ion | | | | | | | |
| TPU | | | | | | | |
| Total (wt%) | 100 | 100 | 100 | 100 | 100 | 100 | 100 |

**Table 3B - Properties of Table 3A Compositions**

| Property | Unit | C1 | Ex1 | Ex2 | Ex3 | Ex4 | Ex5 | Ex6 |
|---|---|---|---|---|---|---|---|---|
| SG | | 1.47 | 1.453 | 1.49 | 1.467 | 1.465 | 1.459 | 1.486 |
| TM | MPa | 13850 | 13000 | 15140 | 14320 | 13480 | 12340 | 15000 |
| TS | MPa | 240 | 226 | 231 | 218 | 225 | 203 | 223 |
| TE | % | 2.1 | 2.5 | 2.2 | 2.3 | 2.3 | 2.3 | 2.2 |
| FM | MPa | 12410 | 10100 | 10800 | 10300 | 10400 | 9380 | 10700 |
| FS | MPa | 103 | 315 | 327 | 316 | 324 | 278 | 305 |
| NII 23 | J/m | 357 | 410 | 416 | 431 | 442 | 402 | 384 |
| UNII 23 | J/m | 966 | 1360 | 1500 | 1470 | 1430 | 1360 | 1450 |
| NII -40 | J/m | | 356 | 327 | 336 | 318 | 340 | 367 |
| UNII -40 | J/m | | 1480 | 1410 | 1420 | 1390 | 1380 | 1560 |
| MAI 23 (max) | J | | 7.14 | 8.6 | 7.58 | 7.36 | 8.62 | 7.62 |
| MAI 23 (fail) | J | | 25.8 | 24.3 | 20.5 | 22 | 23.4 | 24.6 |
| MAI 23 (total) | J | | 26.8 | 25.6 | 21.2 | 23.1 | 23.9 | 25.2 |
| MAI -40 (max) | J | | 7.5 | 8.2 | 6.86 | 7.54 | 7.28 | 8.66 |
| MAI -40 (fail) | J | | 13.4 | 15.6 | 12.7 | 14.9 | 14.3 | 14.6 |
| MAI -40 (total) | J | | 15.1 | 17.4 | 14.1 | 15.9 | 16.6 | 16.6 |
| HDT 0.455 | °C | | | | | | | |
| HDT 1.82 | °C | 261 | 234 | 238 | 238 | 235 | 232 | 242 |

**Table 4A -Example Compositions**

| | | | | | | |
|---|---|---|---|---|---|---|
| Component | Ex7 | Ex8 | Ex9 | Ex10 | Ex11 | Ex12 |
| PA66 | 24.16 | 24.16 | 24.16 | 24.16 | 24.16 | 24.16 |
| PA6 | 27.25 | 24.25 | 21.25 | 27.25 | 24.25 | 21.25 |
| GF | 42 | 42 | 42 | 42 | 42 | 42 |
| STAB | 0.25 | 0.25 | 0.25 | 0.25 | 0.25 | 0.25 |
| Lub(1) | 0.19 | 0.19 | 0.19 | 0.19 | 0.19 | 0.19 |
| Lub(2) | 0.15 | 0.15 | 0.15 | 0.15 | 0.15 | 0.15 |
| MAH-EP(1) | | | | | | |
| MAH-EB | | | | 3 | 4.5 | 6 |
| MAH-HF(1) | 6 | 9 | 12 | 3 | 4.5 | 6 |
| MAH-HF(2) | | | | | | |
| MAH-EP(2) | | | | | | |
| EA | | | | | | |
| Ion | | | | | | |
| TPU | | | | | | |
| Total (wt%) | 100 | 100 | 100 | 100 | 100 | 100 |

**Table 4B - Properties of Table 4A Compositions**

| Property | Unit | Ex7 | Ex8 | Ex9 | Ex10 | Ex11 | Ex12 |
|---|---|---|---|---|---|---|---|
| SG | | 1.461 | 1.463 | 1.427 | 1.395 | 1.377 | 1.445 |
| TM | MPa | 12740 | 12360 | 12200 | 12640 | 11400 | 12640 |
| TS | MPa | 211 | 200 | 194 | 206 | 186 | 191 |
| TE | % | 2.3 | 2.4 | 2.4 | 2.2 | 2.5 | 2.4 |
| FM | MPa | 8640 | 8450 | 7960 | 8710 | 7650 | 9220 |
| FS | MPa | 283 | 275 | 260 | 282 | 258 | 279 |
| NII 23 | J/m | 412 | 423 | 435 | 380 | 441 | 481 |
| UNII 23 | J/m | 1060 | 1240 | 1330 | 1280 | 1270 | 1310 |
| NII -40 | J/m | 405 | 343 | 324 | 353 | 359 | 327 |
| UNII -40 | J/m | 1330 | 1520 | 1440 | 1380 | 1340 | 1480 |
| MAI 23 (max) | J | 9.62 | 8.92 | 9.98 | 8.18 | 8.6 | 8.3 |
| MAI 23 (fail) | J | 25.1 | 29.2 | 31.5 | 27.2 | 30.3 | 26.3 |
| MAI 23 (total) | J | 25.9 | 30.0 | 33.9 | 27.7 | 34.3 | 26.9 |
| MAI -40 (max) | J | 6.42 | 7.18 | 7.26 | 5.06 | 8.92 | 7.46 |
| MAI -40 (fail) | J | 14.5 | 13.4 | 21.4 | 12.3 | 17.9 | 18.4 |
| MAI -40 (total) | J | 15.5 | 15.8 | 21.4 | 20.7 | 19.5 | 19.9 |
| HDT 0.455 | °C | 252 | 250 | 249 | 250 | 249 | - |
| HDT 1.82 | °C | 240 | 238 | 241 | 236 | 235 | 238 |

**Table 5A - Example Compositions**

| Component | Ex13 | Ex14 | Ex15 | Ex16 | Ex17 | Ex18 | Ex19 |
|---|---|---|---|---|---|---|---|
| PA66 | 24.16 | 24.16 | 24.16 | 24.16 | 24.16 | 24.16 | 24.16 |
| PA6 | 27.25 | 24.25 | 21.25 | 27.25 | 24.25 | 21.25 | 21.25 |
| GF | 42 | 42 | 42 | 42 | 42 | 42 | 42 |
| STAB | 0.25 | 0.25 | 0.25 | 0.25 | 0.25 | 0.25 | 0.25 |
| Lub(1) | 0.19 | 0.19 | 0.19 | 0.19 | 0.19 | 0.19 | 0.19 |
| Lub(2) | 0.15 | 0.15 | 0.15 | 0.15 | 0.15 | 0.15 | 0.15 |
| MAH-EP(1) | 3 | 4.5 | 6 | | | | |
| MAH-EB | | | | | | | |
| MAH-HF(1) | 3 | 4.5 | 6 | | | | |
| MAH-HF(2) | | | | 6 | 9 | 12 | 6 |
| MAH-EP(2) | | | | | | | 6 |
| EA | | | | | | | |
| Ion | | | | | | | |
| TPU | | | | | | | |
| Total (wt%) | 100 | 100 | 100 | 100 | 100 | 100 | 100 |

**Table 5B - Properties of Table 5A Compositions**

| Property | Unit | Ex13 | Ex14 | Ex15 | Ex16 | Ex17 | Ex18 | Ex19 |
|---|---|---|---|---|---|---|---|---|
| SG | | 1.451 | 1.467 | 1.441 | 1.463 | 1.496 | 1.527 | 1.46 |
| TM | MPa | 12840 | 12260 | 11500 | 13600 | 13180 | 15200 | 12100 |
| TS | MPa | 206 | 201 | 183 | 229 | 205 | 224 | 184 |
| TE | % | 2.2 | 2.4 | 2.4 | 2.5 | 2.4 | 2.2 | 2.3 |
| FM | MPa | 9070 | 8810 | 8010 | 10400 | 9660 | 10500 | 8590 |
| FS | MPa | 292 | 282 | 258 | 322 | 291 | 313 | 263 |
| NII 23 | J/m | 365 | 420 | 429 | 362 | 401 | 444 | 431 |
| UNII 23 | J/m | 1300 | 1310 | 1380 | 1460 | 1350 | 1220 | 1450 |
| NII -40 | J/m | 341 | 350 | 359 | 294 | 370 | 370 | 288 |
| UNII -40 | J/m | 1410 | 1320 | 1400 | 1410 | 1370 | 1360 | 1480 |
| MAI 23 (max) | J | 9.16 | 7.7 | 8.88 | 8.02 | 9.14 | 9.7 | 7.74 |
| MAI 23 (fail) | J | 25.9 | 27.9 | 29.1 | 24.5 | 26.3 | 27 | 25.7 |
| MAI 23 (total) | J | 27.3 | 28.9 | 30.9 | 24.9 | 26.6 | 28.8 | 26.0 |
| MAI -40 (max) | J | 9.28 | 8.2 | 6.02 | 8.14 | 8 | 8.62 | 8.04 |
| MAI -40 (fail) | J | 17.7 | 18.3 | 17 | 15.9 | 15.5 | 16 | 17.6 |
| MAI -40 (total) | J | 20.1 | 18.6 | 18.8 | 17.1 | 16.6 | 17.6 | 18.6 |
| HDT 0.455 | °C | 249 | 251 | 250 | - | - | - | - |
| HDT 1.82 | °C | 234 | 237 | 238 | 235 | 235 | 244 | 235 |

**Table 6A - Comparative Compositions**

| Component | C3 | C4 | C5 | C6 | C7 | C8 | C9 | C10 |
|---|---|---|---|---|---|---|---|---|
| PA66 | 24.16 | 24.16 | 24.16 | 24.16 | 24.16 | 24.16 | 24.16 | 24.16 |
| PA6 | 27.25 | 24.25 | 21.25 | 27.25 | 24.25 | 21.25 | 21.25 | 27.25 |
| GF | 42 | 42 | 42 | 42 | 42 | 42 | 42 | 42 |
| STAB | 0.25 | 0.25 | 0.25 | 0.25 | 0.25 | 0.25 | 0.25 | 0.25 |
| Lub(1) | 0.19 | 0.19 | 0.19 | 0.19 | 0.19 | 0.19 | 0.19 | 0.19 |
| Lub(2) | 0.15 | 0.15 | 0.15 | 0.15 | 0.15 | 0.15 | 0.15 | 0.15 |
| MAH-EP(1) | | | | | | | | |
| MAH-EB | | | | | | | | |
| MAH-HF(1) | | | | | | | | |
| MAH-HF(2) | | | | | | | | |
| MAH-EP(2) | | | | | | | | |
| EA | 6 | 9 | 12 | | | | 6 | |
| Ion | | | | 6 | 9 | 12 | 6 | |
| TPU | | | | | | | | 6 |
| Total (wt%) | 100 | 100 | 100 | 100 | 100 | 100 | 100 | 100 |

**Table 6B - Properties of Table 6A Compositions**

| Property | Unit | C3 | C4 | C5 | C6 | C7 | C8 | C9 | C10 |
|---|---|---|---|---|---|---|---|---|---|
| SG | | 1.437 | 1.43 | 1.414 | 1.415 | 1.385 | 1.34 | 1.386 | 1.367 |
| TM | MPa | 13100 | 11580 | 11100 | 9936 | 9700 | 8494 | 9898 | 9868 |
| TS | MPa | 209 | 185 | 175 | 188 | 171 | 144 | 163 | 160 |
| TE | % | 2.2 | 2.3 | 2.5 | 2.8 | 2.7 | 2.9 | 2.7 | 2.4 |
| FM | MPa | 8670 | 7730 | 7960 | 7900 | 6800 | 6030 | 7070 | 7390 |
| FS | MPa | 286 | 256 | 253 | 278 | 239 | 215 | 235 | 237 |
| NII 23 | J/m | 362 | 390 | 392 | 313 | 342 | 385 | 343 | - |
| UNII 23 | J/m | 1280 | 1250 | 1180 | 1230 | 1380 | 1460 | 1310 | - |
| NII -40 | J/m | 324 | 305 | 272 | 276 | 262 | 330 | 308 | - |
| UNII -40 | J/m | 1090 | 1320 | 1290 | 1320 | 1270 | 1210 | 1280 | - |
| MAI 23 (max) | J | 7.34 | 7.42 | 5.9 | 8.88 | 6.36 | 6.08 | 7.02 | 7.24 |
| MAI 23 (fail) | J | 22.3 | 20.5 | 22.5 | 22 | 24 | 24.3 | 23.2 | 17.4 |
| MAI 23 (total) | J | 24.3 | 22.7 | 22.9 | 24.6 | 24.9 | 24.4 | 26.3 | 18.0 |
| MAI -40 (max) | J | 6.28 | 5.94 | 6.42 | 4.58 | 8.63 | 5.9 | 5 | 6.2 |
| MAI -40 (fail) | J | 11.7 | 10.4 | 12.2 | 10.7 | 15.6 | 11.2 | 12.7 | 11.3 |
| MAI -40 (total) | J | 13.7 | 10.9 | 14.1 | 12 | 15.6 | 11.3 | 12.9 | 11.8 |
| HDT 0.455 | °C | 251 | 250 | 247 | 241 | 243 | 243 | 246 | - |
| HDT 1.82 | °C | 239 | 234 | 231 | 222 | 222 | 215 | 225 | 219 |

Polyamide (PA) provides better impact performance than many other conventional homopolymer resins such as polybutylene terephthalate (PBT), polypropylene (PP), polystyrene (PS), poly(methyl methacrylate) (PMMA), polycarbonate (PC), polyphenylene sulfide (PPS), polyethersulfone (PES), polyetherimide (PEI) and polyphenylene ether (PPE). Unfortunately, the impact performance of PA at very low temperatures (less than 0 °C) is not good. An impact modifier can significantly improve impact properties. From the data, it is seen that comparative composition C1 - which does not include an impact modifier - has a notched Izod impact strength at 23 °C of less than 400 J/m, often less than 300 J/m. In contrast, all of the example compositions have improved NII performance at 23 °C, with most of the compositions having an NII of at least 400 J/m.

Common impact modifiers that can improve the impact performance of polyamide include ethylene copolymer (ethylene-propylene, ethylene-butene, ethylene-hexene, ethylene-octene copolymers, etc.), ethylene propylene diene monomer (EPDM) rubber (saturated or unsaturated), styrenic copolymers such as SEBS (styrene-ethylene-butylene-styrene), MBS (methacrylate-butadiene-styrene), etc., ethylene-acrylic copolymers, ionomers (including the "super touch nylon" developed by DuPont) and others (thermoplastic polyurethane, silicone rubber, etc.). Each of these impact modifiers can improve the impact properties of polyamide, but mostly at temperatures from room temperature (23 °C) to -20 °C; further, these impact modifiers are not good for compositions having no fiber or low fiber content.

Impact modifiers suitable for use in aspects of the disclosure have a low glass transition temperature (lower than -30 °C, and particularly lower than -40 °C). In certain aspects, ethylene copolymers and in particular ethylene-butene or higher comonomer chains (C4-C8) having a low Tg (for example, -40 °C to -60 °C) were found to perform best at very low temperature. In specific aspects, all example compositions Ex1-Ex19 including these impact modifiers had better low-temperature (-40 °C) NII properties than their respective comparative compositions having other types of impact modifiers.

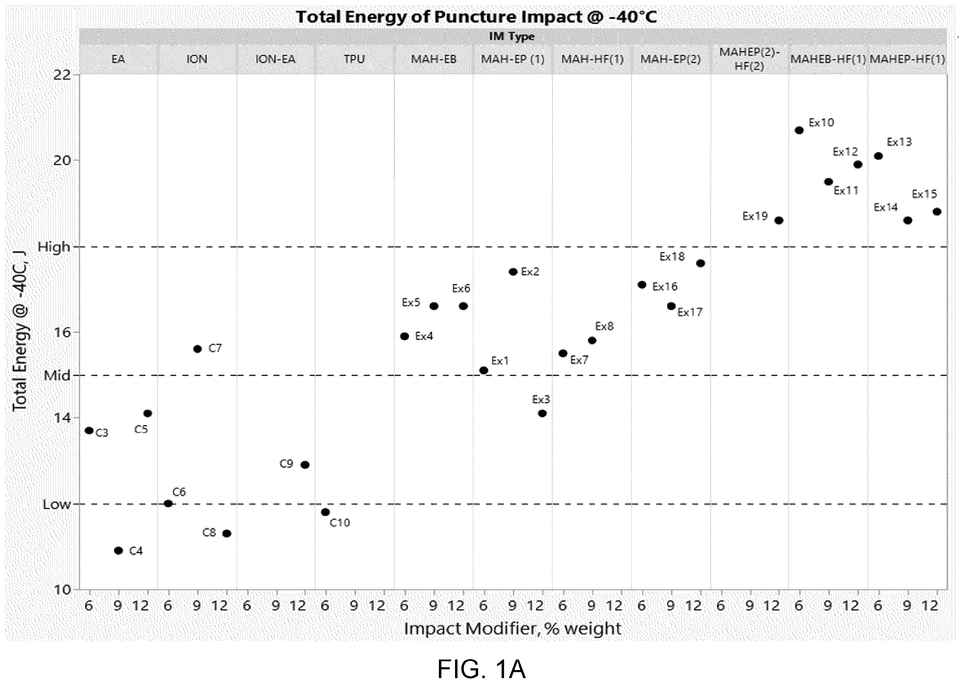

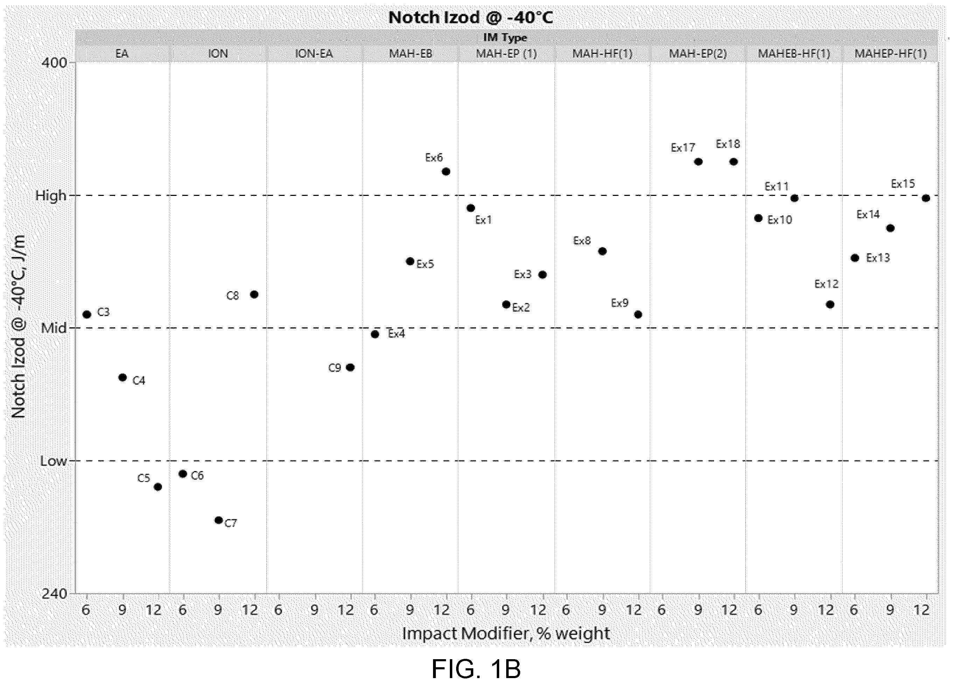

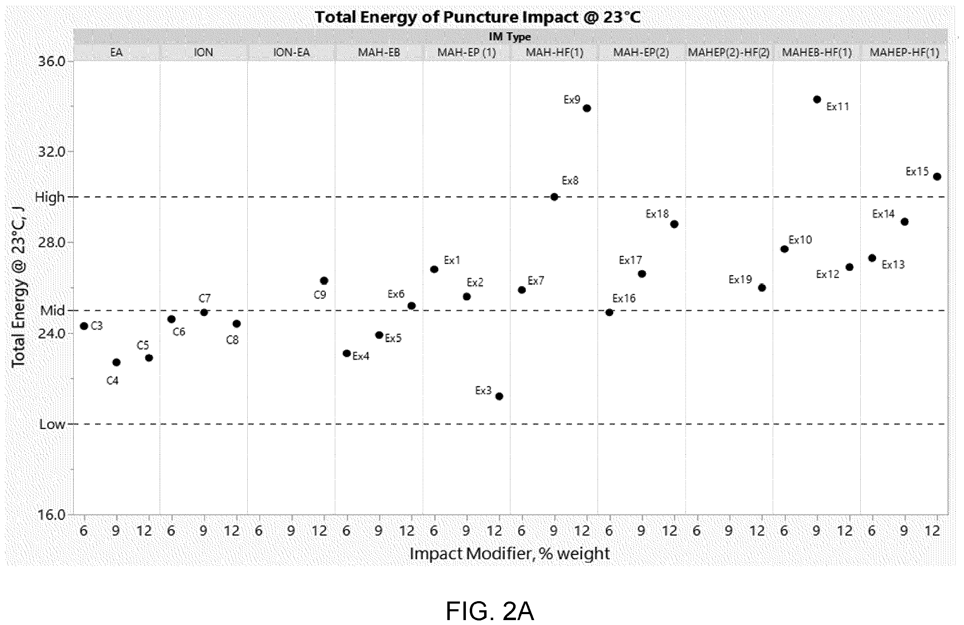

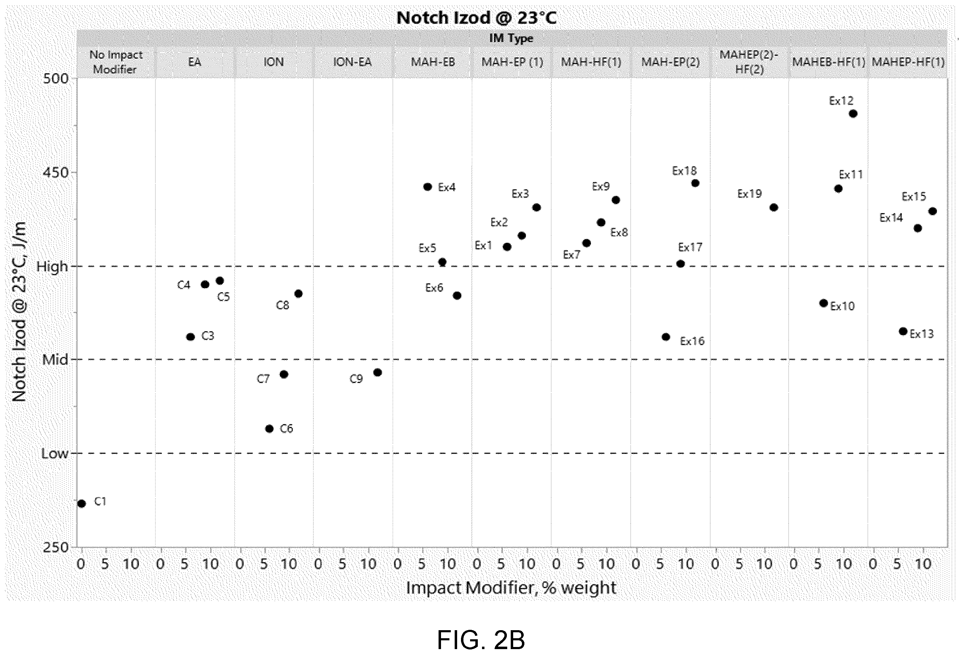

Graphical representations of total energy of puncture impact (TE) and notched Izod (NII) impact properties at -40 °C for the compositions are illustrated in FIGS. 1A and 1B, respectively. Graphical representations of total energy of puncture impact and notched Izod impact properties at 23 °C for the compositions are illustrated in FIGS. 2A and 2B, respectively. The figures show a clear trend of increasing NII as impact modifiers according to aspects of the disclosure are incorporated into the compositions.

An amorphous low Tg and high molecular weight ethylene-butene or longer chain comonomer (C3-C8) modifier is more effective to improve low temperature properties of the PA composition. A semi-crystalline ethylene-copolymer having low viscosity (or high melt flow) can penetrate into the fiber bundles and coat all fiber surfaces uniformly ("dry" fiber is detrimental to mechanical performance including impact properties). Such impact modifiers can form a strong bond between the fiber and polyamide resin. In particular aspects it was found that a combination of an amorphous and a semi-crystalline ethylene-copolymer provided superior low-temperature impact performance. For example, example compositions Ex11-Ex15 included two impact modifiers; the total multi-axial impact energy of these compositions at -40 °C was 18 Joules or higher. Generally, the compositions including only one impact modifier had a total multi-axial impact energy of less than 18 J. In contrast, comparative compositions C3-C10 had much lower total multi-axial impact energy properties.

Without being bound by theory, it is believed that reactive groups such as maleic anhydride, epoxy, carboxylic acid (or its salt), aminosilane, etc. can improve the bonding between the ethylene-copolymer impact modifier and glass fiber, resulting in an improvement in impact performance. In some aspects the maleic anhydride (MAH) content in the composition is in a range of 0.5 wt% to 1.0 wt%. If the MAH content is too high the impact modifier could negatively increase the melt viscosity of the composition; if it is too low it will not form a strong enough bond between the fiber and the polyamide.

### Evaluation of Gloss Properties

Gloss properties were evaluated for example composition Ex12 compared to comparative composition C1 at several injection molding speeds. Gloss was tested using a Byk Micro-Tri-Gloss Meter which measures gloss according to ISO 2813, ASTM D 523, and DIN 67530. The conditions and gloss data are shown in Table 7:

**Table 7 - Gloss Properties**

| **Composition** | **Injection molding speed (inches/min)** | **Gloss (20°)** | **Gloss (60°)** |
|---|---|---|---|
| C1 | 1 | 22 | 67 |
| C1 | 3 | 15 | 58 |
| C1 | 5 | 15 | 49 |
| Ex12 | 1 | 16 | 51 |
| Ex12 | 3 | 20 | 62 |
| Ex12 | 5 | 20 | 63 |

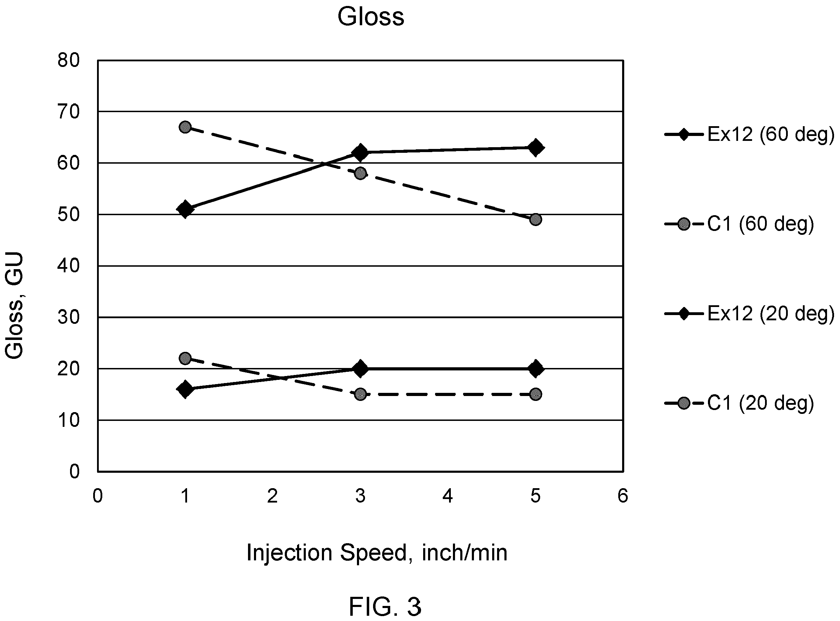

A graphical representation of the gloss properties is shown in FIG. 3. It was observed that example composition Ex12 (including two impact modifiers according to aspects of the disclosure) had improved gloss properties as injection molding speed increased. In contrast, gloss decreased with injection molding speed for comparative composition C1. Without being bound by theory, it is believed that the higher shear rate resulting from the increased injection molding speed causes the impact modifier in Ex12 to migrate towards the surface of the molded part, enhancing the gloss of the composition. A higher injection molding speed allows for a reduced molding cycle time.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
at least one polyamide resin;
at least about 30 wt% of a reinforcing fiber, wherein the reinforcing fiber has a fiber length of at least about 10 millimeters (mm); and
an impact modifier component comprising at least one impact modifier having a glass transition temperature (Tg) of about -30 degrees Celsius (°C) or lower as determined in accordance with a differential scanning calorimetry (DSC) test method at a scan rate of 20 °C per minute in nitrogen,
wherein
the thermoplastic composition has a notched Izod impact strength of at least 300 Joules per meter (J/m) at -40 °C as determined in accordance with ASTM D256 and ASTM D4812,
the thermoplastic composition has a multi-axial impact energy of at least 15 J at -40 °C as determined in accordance with ASTM D3763, and
the combined weight percent value of all components does not exceed 100 wt%, and all weight percent values are based on the total weight of the composition.

2. The thermoplastic composition according to claim 1, wherein the polyamide resin comprises polyamide 6,6, polyamide 6, polyamide 6,12, polyamide 6,10, aromatic polyamide, semi-aromatic polyamide, or a combination thereof.

3. The thermoplastic composition according to claim 1 or 2, wherein the reinforcing fiber comprises glass fiber, carbon fiber, or a combination thereof.

4. The thermoplastic composition according to any of claims 1 to 3, wherein the composition comprises from about 30 wt% to about 60 wt% of the reinforcing fiber.

5. The thermoplastic composition according to any of claims 1 to 4, wherein the at least one impact modifier comprises maleic anhydride, carboxylic acid, epoxy-modified ethylene-octene, epoxy-modified ethylene-hexene, epoxy-modified ethylene-butene, or a combination thereof.

6. The thermoplastic composition according to claim 5, wherein the impact modifier component comprises at least two impact modifiers having a Tg of about -30 °C or lower.

7. The thermoplastic composition according to any of claims 1 to 6, wherein the composition comprises from about 3 wt% to about 15 wt% of the impact modifier component.

8. The thermoplastic composition according to any of claims 1 to 7, wherein the composition comprises at least one additional additive comprising an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an additional impact modifier, a blowing agent, a reinforcing agent, or a combination thereof.

9. The thermoplastic composition according to any of claims 1 to 8, wherein:
the composition has a heat deflection temperature of at least 200 °C at 1.82 Megapascals (MPa) as tested in accordance with ASTM D648, or
the composition has a tensile modulus of at least 10,000 MPa as tested in accordance with ASTM D638.

10. The thermoplastic composition according to any of claims 1 to 9, wherein a molded article comprising the composition has improved gloss properties when injection molded at a speed of at least 3 inches per minute as compared to a molded article comprising a comparative composition that does not include the impact modifier component, wherein gloss is determined at 20 degrees and 60 degrees in accordance with ISO 2813, ASTM D 523, and DIN 67530.

11. The thermoplastic composition according to any of claims 1 to 10, wherein the composition is a dispersed pultruded composition.

12. A method for forming a pelletized thermoplastic composition comprising:
combining, to form a mixture, (a) at least one polyamide resin, and (b) an impact modifier component comprising at least one impact modifier having a glass transition temperature (Tg) of about -30 degrees Celsius (°C) or lower as tested in accordance with a differential scanning calorimetry (DSC) test method at a scan rate of 20 °C per minute in nitrogen;
extruding the mixture in a pultrusion process to combine the mixture with a continuous reinforcing fiber and form an extruded composition; and
pelletizing the extruded composition to form the pelletized thermoplastic composition,
wherein
the pelletized thermoplastic composition comprises reinforcing fiber having a fiber length of at least about 10 mm,
the pelletized thermoplastic composition has a notched Izod impact strength of at least 300 Joules per meter (J/m) at -40 °C as determined in accordance with ASTM D256 and ASTM D4812,
the pelletized thermoplastic composition has a multi-axial impact energy of at least 15 J at -40 °C as determined in accordance with ASTM D3763, and
the combined weight percent value of all components does not exceed 100 wt%, and all weight percent values are based on the total weight of the composition.

13. A method for forming a plurality of thermoplastic pellets comprising:
(a) forming polyamide-fiber pellets from a process comprising
(1) forming a first mixture comprising at least one polyamide resin,
(2) extruding the first mixture in a pultrusion process to combine the first mixture with a continuous reinforcing fiber and form a first extruded composition, and
(3) pelletizing the first extruded composition to form the polyamide-fiber pellets; and
(b) forming impact modifier pellets from a process comprising
(1) forming a second mixture comprising at least one polyamide resin and an impact modifier component comprising at least one impact modifier having a glass transition temperature (Tg) of about -30 degrees Celsius (°C) or lower as tested in accordance with a differential scanning calorimetry (DSC) test method at a scan rate of 20 °C per minute in nitrogen,
(2) extruding the second mixture to form a second extruded composition, and
(3) pelletizing the second extruded composition to form the impact modifier pellets,
wherein the polyamide-fiber pellets comprise reinforcing fiber having a fiber length of at least about 10 mm.

14. A method for forming a thermoplastic composition according to claim 13, comprising:
(a) combining the polyamide-fiber pellets and the impact modifier pellets to form a pellet mixture; and
(b) melting the pellet mixture to form the thermoplastic composition,
wherein
the thermoplastic composition has a notched Izod impact strength of at least 300 Joules per meter (J/m) at -40 °C as determined in accordance with ASTM D256 and ASTM D4812,
the thermoplastic composition has a multi-axial impact energy of at least 15 J at -40 °C as determined in accordance with ASTM D3763, and
the combined weight percent value of all components does not exceed 100 wt%, and all weight percent values are based on the total weight of the composition.

15. The method according to any of claims 12 to 14, wherein the at least one polyamide resin comprises polyamide 6,6, polyamide 6, polyamide 6,12, polyamide 6,10, polyamide 10,10, polyamide 4,10, polyamide 4,6, aromatic polyamide, semi-aromatic polyamide, or a combination thereof.
